# EUROPEAN PATENT APPLICATION

(11) **EP 1 128 318 A2**
(43) Date of publication of application: **29.08.2001**
(21) Application number: 00201551.9
(22) Date of filing: 28.04.2000
(51) Int. Cl.: G06K 11/14, G06K 11/08

(54) **Position detection device**

(30) Priority: 21.02.2000 DK 200000267
(71) Applicant: Cyberboard A/S, 7190 Billund (DK)
(72) Inventor: Jensen, Lars Bo, 6040 Egtved (DK); Du Midi, Dent-de-Lion, 7250 Hejnvig (DK); Eskildsen, Jorn, 7160 Torring (DK)
(74) Representative: Elmeros, Claus

(57) **Abstract**

The invention relates to a position detection system for a detection area, preferably a whiteboard, said system comprising means for detecting at least one position of at least one marker operating within said detection area,
said system comprising means for storing a sequence of said detected positions in at least one memory arrangement, said memory arrangement comprising interfacing means () for exporting the stored positions or at least some of the positions.

According to the invention, the stored sequence may be displayed on a screen reflecting the picture drawn on the board. The stored data may be displayed sequentially, i.e. illustrating the "file history" in the sense that the displayed picture is established in the same order as when the components of the drawing were made on the board. Evidently, according to a preferred embodiment of the invention, the data may also be presented as slides, each slide representing the complete screenshot of a drawing made on the board.

## Description

### Background of the invention

Various types of position detection devices that may be retrofitted are well-known within the art. These are traditionally fixed onto a board by means of suckers, velcro tape or the like. Such position detectors benefit from a high degree of flexibility due to the fact that they may be mounted and dismounted from a board quite easily without any operation of screws or similar fastening means.

A problem with the known retrofittable position detectors applying velcro is that the detectors lack precise mounting. Relatively ineffective and bad positioning of the detectors affect the obtainable precision of the measurement. Consequently, velcro has found very little use, if any, in commercially available detectors.

A problem with the position detectors applying suction cups is that fastening means comprising simple suction cups gradually loose their grip over time, and sometimes even fall off the board. This problem has been dealt with by some detector types applying a very complex and large suction cup structure. This suction cup structure is more reliable than the above-mentioned detector, but the size of the position detector arrangement increases significantly when using such suction cup structures. Moreover, the applicable detector techniques are reduced to ultrasound.

It is an object of the invention to provide a retrofittable position detector unit suitable for both ultrasound and electromagnetic light detection.

### Summary of the invention

The invention relates to a position detection system for a detection area according to claim 1, preferably a whiteboard, said system comprising means for detecting at least one position of at least one marker operating within said detection area, said system comprising means for storing a sequence of said detected positions in at least one memory arrangement, said memory arrangement comprising interfacing means () for exporting the stored positions or at least some of the positions.

According to the invention, the stored sequence may be displayed on a screen reflecting the picture drawn on the board. The stored data may be displayed sequentially, i.e. illustrating the "file history" in the sense that the displayed picture is established in the same order as when the components of the drawing were made on the board. Evidently, according to a preferred embodiment of the invention, the data may also be presented as slides, each slide representing the complete screenshot of a drawing made on the board.

A marker according to the invention may e.g. comprise a pen, a pointer an eraser or any similar user operable device.

The export of the position data may take place in several different ways within the scope of the invention.

When, as stated in claim 2, a position detection system according to claim 1 wherein the memory arrangement comprises a removable memory cartridge (165C; 220), a further embodiment of the invention has been obtained.

The memory cartridge may e.g. be utilized for an easy plug- and play export of the obtained data to e.g. a computer.

According to the invention, the system may be used as a stand-alone system being operational within very few seconds due to the fact that the system requires no external control computer or the like. The ideas illustrated on the board may instantly be captured in the memory and transferred to a display device and subsequently to a computer.

The present embodiment benefits from the fact that the ideas illustrated on e.g. a whiteboard are typically of a somewhat confidential nature. The application of a memory dump cartridge ensures that the captured information may be kept in entrusted hands only in a simple way.

A removable cartridge represents a very simple and convenient way of establishing the needed interface between external computers and the position detecting system. Hence, the memory card facilitates very quick booting of the system which may be very important for "capture your mind" purposes when users need to discuss important subject matters.

When, as stated in claim 3, the interface means comprises a wireless interface (182; 184) adapted for wireless transmission of at least some of the data stored in said memory arrangement to an external processing unit, a further advantageous embodiment of the invention has been obtained.

The external processing may e.g. be a transportable desktop computer, a network server or the like.

When, as stated in claim 4, the interface means comprises an IRDA interface or a Bluetooth interface, a further advantageous embodiment of the invention has been obtained.

An advantageous feature of the implementation of an IRDA or a Bluetooth interface between the system and an external unit is that such interfaces, especially IRDAs, are well supported by software and hardware suppliers. Most computers are e.g. implemented with an IRDA interface.

Moreover, the invention relates to a position detection system, according to claim 5 for a detection area, preferably a whiteboard, said system comprising means for detecting at least one position of at least one marker operating within said detection area,
said system comprising cordless transmission means () arranged in relation to the detection area,
said at least one marker (13) comprising retroreflecting means (150) arranged for reflecting signals transmitted from said cordless transmission means () toward cordless detection means (),
at least one of the said markers (13) comprising further cordless transmission means (),
said further transmission means (145) being adapted for transmitting coded communication signals () to said cordless detection means ().

Such coded information may e.g. determine the function of the marker, i.e. that the marker e.g. is a pen having a certain color and/or a certain tip property (line width), an eraser having a certain size and shape of the erasing area, etc.

When, as stated in claim 6, the communication signals comprise at least one signal representing an on/-off condition of the said marker (13), a further advantageous embodiment of the invention has been obtained.

The simple transmission of an on-off signal represents a very advantageous embodiment of the invention due to the fact that valuable information about the writing or non-writing condition of the marker may be transmitted while consuming very little energy.

Evidently, other communication signals representing e.g. the color of the marker, type of the marker, e.g. the specification of an eraser may be used.

Moreover, the invention relates to a marker (13) according to claim 7 for a position detection system, said marker (13) comprising retro-reflecting means (150) for reflection of electromagnetic light, said marker (13) comprising further transmission means (145) being adapted for transmitting coded communication signals () to cordless detection means ().

The combination of a passive detection principle and an active communication principle offers advantageous low energy consumption combined with reliable and remote detection of the operating condition and position of the marker.

It should be noted that the activity of the active part of the pen, i.e. the part of the pen which has to be powered from an internal data source, is relatively low due to the fact that communication signals transmitted from the pen are not necessarily continuos. Transmission of e.g. on-off signals, color indication signals or the like may in fact not be performed very often which is certainly not the case with respect to position indicating signals that have to be transmitted on a more or less continuous basis during operation.

A very simple way of coding according to the present embodiment of the invention is by using coding implying that the transmission means are simply activated when the marker is in writing position and deactivated when the pen is lifted or shut off manually by the user.

When, as stated in claim 8, said communication signals comprise at least one signal representing an on/-off condition of the said marker (13), a further advantageous embodiment of the invention has been obtained.

The simple transmission of an on-off signal represents a very advantageous embodiment of the invention due to the fact that valuable information about the writing or non-writing condition of the marker may be transmitted while consuming very little energy.

Evidently, other communication signals representing e.g. the color of the marker, type of the marker, e.g. the specification of an eraser may be used.

Moreover, the invention relates to position detection system for a detection area according to claim 9, preferably a whiteboard, said system comprising means (130, 131) for detecting at least one position of at least one marker operating within said detection area,
said system comprising cordless transmission means () arranged in relation to the detection area,
said at least one marker (13) comprising retro reflecting means (150) arranged for reflecting signals transmitted from said cordless transmission means () toward cordless detection means (),
said retro reflecting means (150) comprising a pattern (150, 151) of retro-reflective material,
and said detection means (130, 131) for detecting at least one position of at least one marker comprising means for detecting the vertical position of the at least one marker (13) on the basis of recognition of said pattern (150, 151).

Such a pattern may e.g. be a bar code made in or from a retro reflecting material.

When, as stated in claim 10, the detection means (130, 131) comprises at least one CCD-camera wherein the vertical position of at least one of the markers (13) is derived from the vertical position of the pattern on the CCD-camera, a further advantageous embodiment of the invention has been obtained.

A CCD array may e.g. be utilized for very specific recognition of patterns made in or by the retro-reflector for a particular purpose. Such an application would e.g. be the detection of the vertical position of the marker with respect to the marker/writing surface.

Moreover, the invention relates to a marker (13) for a position detecting system according to claim 11, said marker (13) comprising retro-reflecting means (150) for reflection of electromagnetic light, said retro reflecting means (150) comprising a pattern (150, 151) of a retro reflective material.

Moreover, the invention relates to a board system according to claim 12, preferably a whiteboard comprising a board (105), a wireless position detection system, said system being arranged for detection of the position of at least one marker (16) with respect the board,
at least a portion of said board comprising a galvanic conducting material,
said position detection system comprising at least two sensor arrangements being arranged so as to detect position indicating signals emitted from said at least one marker (16), and at least a portion of the wireless position detection system being at least partly encapsulated by the portion of said board comprising a galvanic conducting material.

The two sensor arrangement may be arranged within a common housing as long as they are mutually displaced so as to detect the position of a marker on the basis of position indicating signals emitted from the marker.

An important advantage of the system is that the effect of electric noise-inducing apparatuses, such as mobile phones, on the system may be reduced significantly due to the encapsulation of the components making it less vulnerable to electromagnetic noise.

Preferably, the surface of the board and additionally attached encapsulating means arranged on the rear side of the surface of the board should form a complete Faraday cage or at least a portion of a such a cage in order to reduce induction of noise from the environment.

It should be noted that the environment of a typical write board is very noisy due to the fact that persons using such a board are typically equipped with all sorts electromagnetic noise generators such as mobile phones.

It should moreover be noted that optimal electromagnetic decoupling or encapsulation may be crucial in several applications of the described kind due to the fact that the level of the position indicating signals is typically extremely low, thus implying very low obtainable signal/noise ratio.

It should moreover be noted that requirements to the electrical cables applied for communication between the arrangements of the system may be reduced by ensuring that the cables are well-protected against ambient electromagnetic noise by means of the conductive board.

Hereby, it is possible to conceal most detectors from the users and only leave a small part exposed on the front side.

Incorporating detectors in a whiteboard instead of using separate devices has many advantages. The constructor knows the exact dimensions and tolerance on the whiteboard making it possible to create a more precise system. Also, the position of the detector boxes will not change significantly over time.

In addition, the integration of the typically two position detector measuring units in the board will result in a significant reduction in calibration problems between the two detector boxes.

Moreover, the invention relates to a board system according to claim 13, preferably a whiteboard comprising a wireless position detection system, said system being arranged for detection of the position of at least one marker () with respect the board,
at least a portion of said board comprising a galvanic conducting material,
said position detection system comprising at least two sensor arrangements being arranged so as to detect position indicating signals emitted from said at least one marker (),
said at least two sensor arrangements communicating with at least one central processing unit () by means of electric connections (), at least a part of said electric connections being at least partly encapsulated by the portion of the board comprising a galvanic conducting material.

When, as stated in claim 14, said portion of said board comprising a galvanic conducting material is electrically grounded, a further advantageous embodiment of the invention has been obtained.

When, as stated in claim 15, said board system comprising built-in power supply means (), said power supply means being at least partly encapsulated by means of said portion of said board comprising a galvanic conducting material, a further advantageous embodiment of the invention has been obtained.

When, as stated in claim 16, said power supply means are mains-coupled, a further advantageous embodiment of the invention has been obtained.

According to the invention, the required electric power from the AC mains has been obtained due to the fact that most parts vulnerable to electric noise may be effectively isolated from the AC noise of the mains.

According to the present embodiment of the invention, power supply in the form of batteries in both the detecting part of the system and the markers may be avoided due to the fact that noise introduced by the AC mains connection may be reduced significantly.

When, as stated in claim 17, the board system comprises a board surface having a bend of less than 10 millimeters, preferably less than 5 millimeters in the normal direction, a further advantageous embodiment of the invention has been obtained.

When reducing the bend of the board, the detection system arranged at the circumference of the board may be arranged closely to the detection surface, thus creating a minimum of errors due to alignments of the marker while also providing a detection area where the occurrence of errors is uniform.

Moreover, the invention relates to a position or angle detection unit (112) according to claim 18 comprising a housing () mounted with fastening means (110), said fastening means being adapted to fastening the unit (112) onto a mounting surface () such as a whiteboard surface
said housing () comprising position detection means () with at least one input portion (114) said input portion being adapted to guiding "light or sound beams" to a corresponding sensor arrangement (7) within the housing ()
said fastening means comprising magnetic fastening means ().

According to the invention, the sensor may e.g. be an infrared diode, an ultrasound receiver, a laser light receiver or more complex sensor types such as CCD or PSD.

An input portion according to the invention may e.g. comprise a cylindrical lens.

The simple transducer types would typically be arranged in pairs.

This will create the necessary steadiness and fastening of the box in a very simple way.

When, as stated in claim 19, the unit (112) comprises light receiving means (8), preferably infrared light receiving means (8), a further advantageous embodiment of the invention has been obtained.

When, as stated in claim 20, the said input portion comprises optical lens means (114), a further advantageous embodiment of the invention has been obtained.

When, as stated in claim 21, the magnetic fastening means are arranged with respect to an optical path between the input portion (114) and the position sensor arrangement (7) in such a way that the distance (d) between an input focal plane (115) and the mounting surface ()is less than 50 millimeters, preferably less than 20 millimeters when the unit is mounted to the mounting surface (), a further advantageous embodiment of the invention has been obtained.

When reducing the distance between the "sensing" plane and the mounting surface to an absolute minimum, e.g. 1-20 mm, an advantageous design of the marker may be applied, as the retroreflector or wave emitter on the marker may be located very closely to the active tip or surface of the marker, thus reducing alignment errors.

When, as stated in claim 22, the magnetic fastening means comprise a plurality of magnets (110) arranged on the lower surface of the housing 0, a further advantageous embodiment of the invention has been obtained.

When dealing with a plurality of magnets, effective fastening to the mounting surface may be obtained even if the mounting surface is not completely flat. This punctual fastening is extremely advantageous with respect non-flexible fastening means such as magnets as low tolerance may reduce the strength of the intended fastening significantly.

When, as stated in claim 23, the magnetic fastening means comprise one magnet arranged on the lower surface of the housing (), a further advantageous embodiment of the invention has been obtained.

One magnet having a large surface provides an effective magnetic attraction to the mounting surface.

When, as stated in claim 24, the magnets of said magnetic fastening means are less than 10 millimeters, preferably less than 4 millimeters, a further advantageous embodiment of the invention has been obtained.

When, as stated in claim 25, the unit comprises means for adjusting at least one of the magnets vertically, a further advantageous embodiment of the invention has been obtained.

The possibility of adjusting the magnet e.g. during calibration provides the possibility of mounting the unit with maximized attraction to the mounting surface.

When, as stated in claim 26, the fastening means comprise at least one high friction member (111) arranged in such a way that at least one of the high friction members (111) is in contact with the mounting surface when the unit is attached to said surface by means of the said fastening magnets/means, a further advantageous embodiment of the invention has been obtained.

According to the present embodiment of the invention, the unit may be fastened onto the mounting surface in a very advantageous way due to the fact that high-friction members ensure that the detection unit maintains its position when fastened. This is particularly advantageous when the detector houses are connected by means of cables due to the fact that the cables tend to pull the units, thereby gradually implying an undesired rotation of the unit.

Together with the magnet or magnets, a very durable and steady fastening is created which will not change significantly over time.

The high friction material may e.g. be natural rubber or other suitable materials.

### Drawings

The invention will be described below with reference to the drawings in which
- fig. 1: illustrates a whiteboard with position detection means according to the invention,
- fig. 2a: illustrates another whiteboard with position detection means,
- fig. 2b: illustrates a position detector,
- fig. 3: illustrates a position detector with an aperture arrangement,
- fig. 4a, 4b: illustrates another variation of the aperture arrangement
- fig. 5: illustrates a position detector with a beam splitter,
- fig. 6: illustrates a position detector known within the art,
- fig. 7: illustrates the same position detector seen from the side,
- fig. 8: illustrates a position detector according to the invention,
- fig. 9: illustrates another embodiment of the position detector,
- fig. 10: illustrates a whiteboard and a pen with a given alignment,
- fig. 11: illustrates the function of the pen with different alignments,
- fig. 12a, 12b: illustrate a position detector seen from the rear and the side,
- fig. 12c: illustrates another embodiment of the position detector seen from the side,
- fig. 13: illustrates a cross-section of a whiteboard with a built-in position detector,
- fig. 14: illustrates a whiteboard with built-in position detectors seen from the rear,
- fig. 15: illustrates an embodiment of the pen,
- fig. 16a: illustrates an embodiment of the tip of the pen,
- fig. 16b: illustrates an add-on detector surface,
- fig. 17a: illustrates an control box built into a penholder
- fig. 17b: illustrates another embodiment of the control box built into a penholder,
- fig. 18a: illustrates the elements of the position detection system schematically,
- fig. 18b: illustrates an embodiment of the position detection system schematically
- fig. 18c: illustrates another embodiment of the position detection system schematically
- fig. 18d: illustrates a part of the position detection system schematically and
- fig. 18e: illustrates another embodiment of the above-mentioned part schematically, and where
- fig. 19: illustrates the principal electrical components of a position detection system according to the invention.

### Detailed description

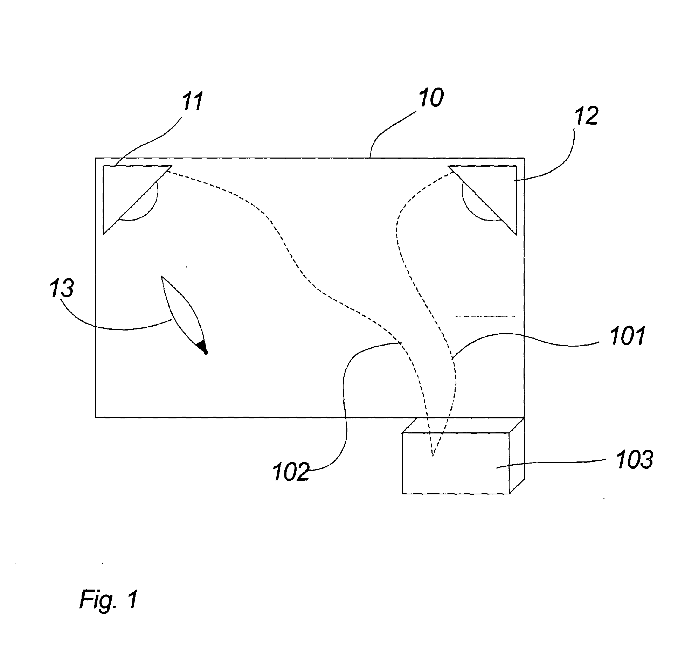

Fig. 1 shows an overview of the invention. It comprises a writeable board 10, preferably a whiteboard, and a left sensor 11 and a right sensor 12 mounted in the upper corners of the board and designed to detect the position of a whiteboard pen 13. The sensors are preferably infrared (IR) sensors and can either be integrated in the board or mounted onto the surface of the board, by some mounting device, preferably magnets. Further, it comprises a control box with central processing hardware of the whole system built into a penholder 103, preferably mounted under the board or integrated in the board. The sensors 11, 12 are connected to the penholder by cables 101, 102 either inside or behind the board or along the edges of the board.

The pen is provided with two or preferably four IR diodes for establishment of a fairly circular field around the pen.

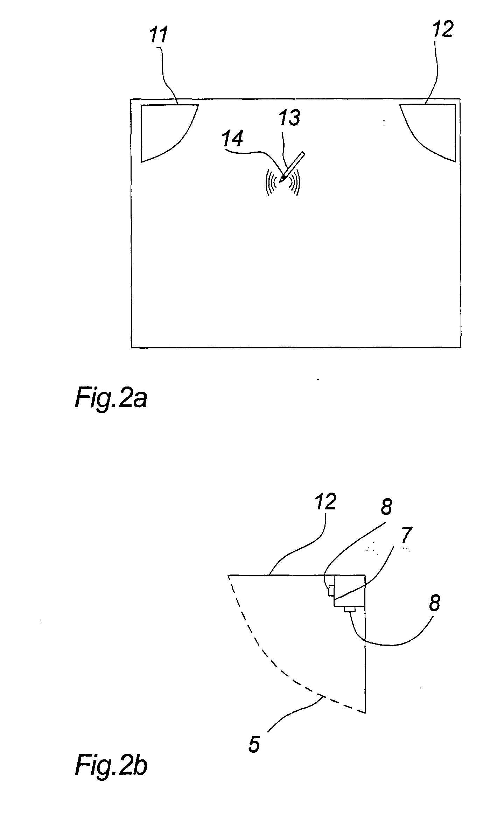

The position sensors comprise two IR detectors whose mutual signal relation determines the angle of the incident light generated by the diodes 13 of the pen 14, as illustrated in figure 2a.

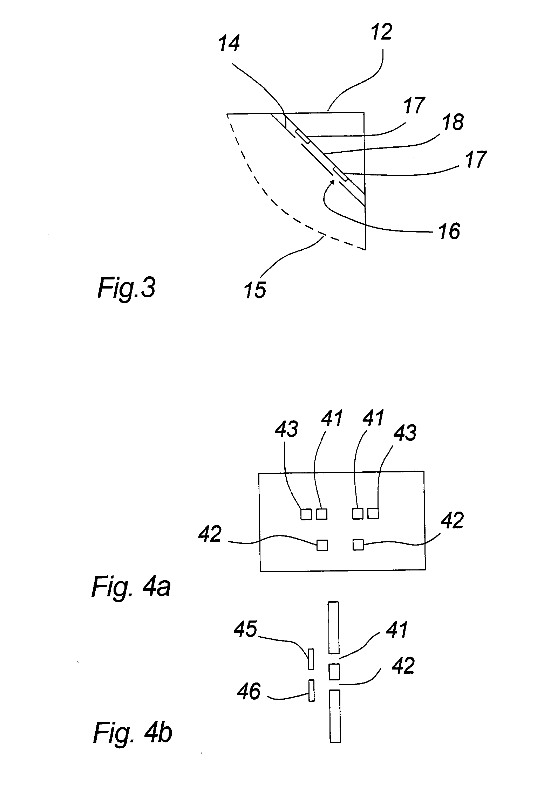

A detailed illustration of the construction of the angle detectors described above is provided in figures 2b and 3 below, illustrating two different embodiments of an angle detector.

The first possible embodiment of an angle detector 12 is illustrated in figure 2b below.

The angle detector 12 comprises a box in which two IR sensors 8 have been installed and are mutually angled on two assembly sheets 7. The assembly sheets 7 (and thus the sensors) are mutually angled at 90°.

The angle detector 12 is fronted by a curved cylinder lens 5 whose purpose it is to establish optical reinforcement by focusing on the incident IR light in the focus area of the lens against the sensors 8.

The incident light angle against the detector 12 is determined by comparing it with light picked up by the sensors 18.

An alternative version of an angle detector 12 is illustrated in figure 3.

This version of angle detection is also based on an evaluation of signals received by two IR sensors 17 and an aperture arrangement situated in front of the sensors comprising a plate 14 with aperture openings 16. The two apertures establish the direction of the incident light against the sensors 17 despite the fact that they are mounted at the same level. The illustrated version in figure 3 is preferable to the version illustrated in figure 2b as the installation at one PCB installation level reduces production costs just as the uncertainty of the direction of the sensors is reduced.

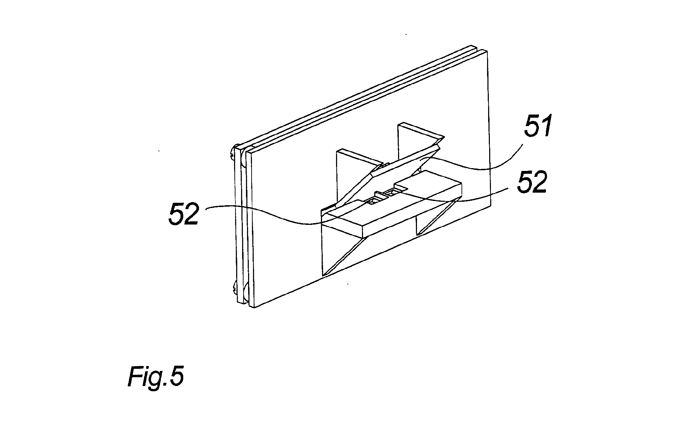

Figures 4a and 4b below illustrate yet another variation of the aperture arrangement illustrated above. Figure 4a shows an aperture arrangement from the front and figure 5b illustrates an aperture arrangement from the side.

As is apparent from the above, the preferred detector arrangement comprises a total of six detectors of which four comprise two aperture sets 41 and 42. The upper aperture set is identical with the apertures 16 in figure 3 while the apertures 42 form an additional set of apertures with accompanying sensors 46. The aperture set 41 is situated in front of a couple of sensors 45 and the aperture set 42 is situated in front of another couple of sensors 46.

The purpose of the additional aperture set 42/the couple of sensors 45 is to create a background estimate that may subsequently be subtracted from the signal received by the sets of sensors 44.

An additional embodiment is illustrated in fig. 5.

A significant variation in relation to the above-mentioned embodiments is that a horizontally placed set of detectors 52 has now been added. A beam splitter 51 divides the incident light between the horizontally placed set of detectors and the original and vertical set of detectors (not shown in the figure).

A significant feature of this particular embodiment is that one single light beam is shared by a horizontal detector 52 and a vertical detector in such a manner that the optics are free of differential errors.

Apart from that, the original blinders have now been replaced by so-called venetian blinds which are a 3M standard product. In the shown embodiment, the sensors have been cross connected.

Other obvious alternatives to the illustrated position detection techniques may be obtained by means of a CCD or the like.

An example of such an embodiment is known from US 4,576,481.

An obvious alternative to an active pointer is the mounting of a retro reflector on the pointer, e.g. a pen or an eraser. This technical solution requires that each corner detector is e.g. mounted with a light source arrangement of light sourc(es) in close proximity to a set of detectors.

The detection principle may e.g. be electromagnetic or based on ultrasound.

### Separate detectors

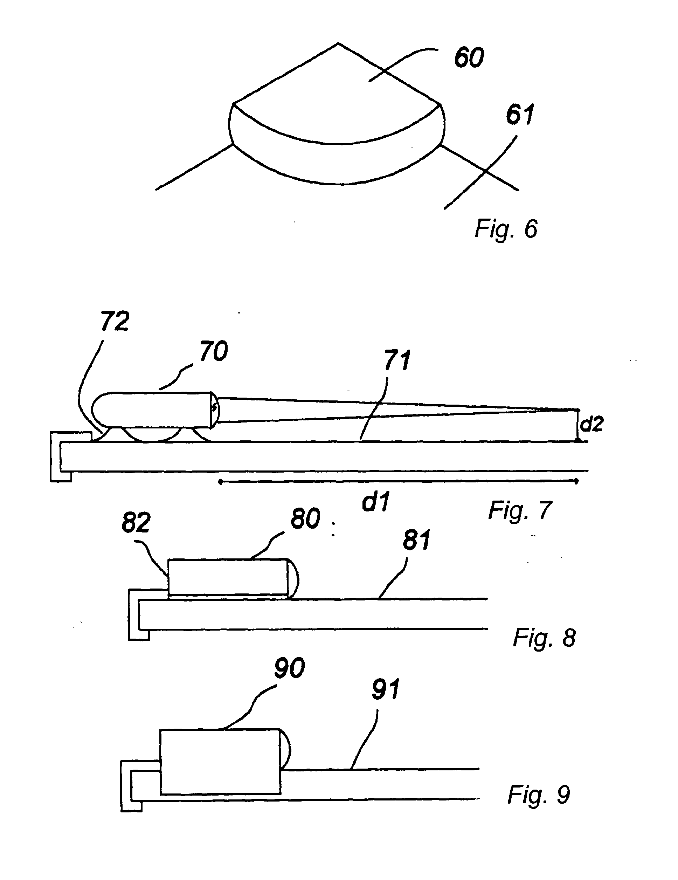

Fig. 6 shows a detector box on a foundation 61, such as a whiteboard, mounted in the traditional manner. The corner detectors may typically be mounted subsequently by means of fastening means relatively easy to mount and dismount.

A position detector system will typically comprise two detector boxes placed at a mutual distance.

Fig. 7 shows an example of mounting a detector box according to the known technique.

The cross-section illustration shows a corner detector mounted on a detector foundation 71, such as a whiteboard, by means of suckers 72. The illustrated detector arrangement focuses on a remote point at a distance dl from the detector and at a certain level d2 from the foundation.

A problem with the known technique is that whiteboards are not always mounted in a very stable manner. This means that the whiteboard may move when written upon. Such movements may result in the mounted detector boxes swinging in relation to the foundation. Even seemingly insignificant angle changes of the detector box 70 will result in a significant displacement of the focus point in relation to dl.

This change must be seen in the light of the fact that position determination is carried out on the basis of trigonometric calculations in relation to e.g. an additional position detector.

Apart from this, it should be noted that the shown system has certain requirements to a pointer used on the writing surface, whether active or passive (e.g. retro reflective). The signal received by the detector box 71 will vary (drop) significantly as the distance increases unless the retro reflector or sound/light emitter arrangement on the pointer is moved upwards in the direction of the focus line of point d2.

This implies that a user is likely to be in the way of the emitter/reflector of the pointer. This will naturally result in a loss of signal quality and in certain irregularities. Apart from that, dynamic angle displacements in relation to the normal axis of the foundation will result in significant errors in the position determination as the emitter/reflector will not represent the actual position of the tip of the pen when moved further away due to angle displacements.

Fig 8 illustrates an embodiment according to the invention where the detector system has eliminated the above-mentioned problems by relatively simple means.

A detector box 80 has been fixed onto a magnetic foundation 81 by means of a magnet 82.

According to the invention, it has turned out that fairly simple means provide the opportunity to place emitters/reflectors optimally onto the pointer and in close proximity to the tip of the pen. In addition, a magnet is capable of maintaining a fairly even signal level due to its unique capturing of the detector box 80 in the normal direction, even at a relatively significant distance from the detector box 80.

One of the reasons for this improvement in signal quality is e.g. that the detector system is lowered in relation to the foundation.

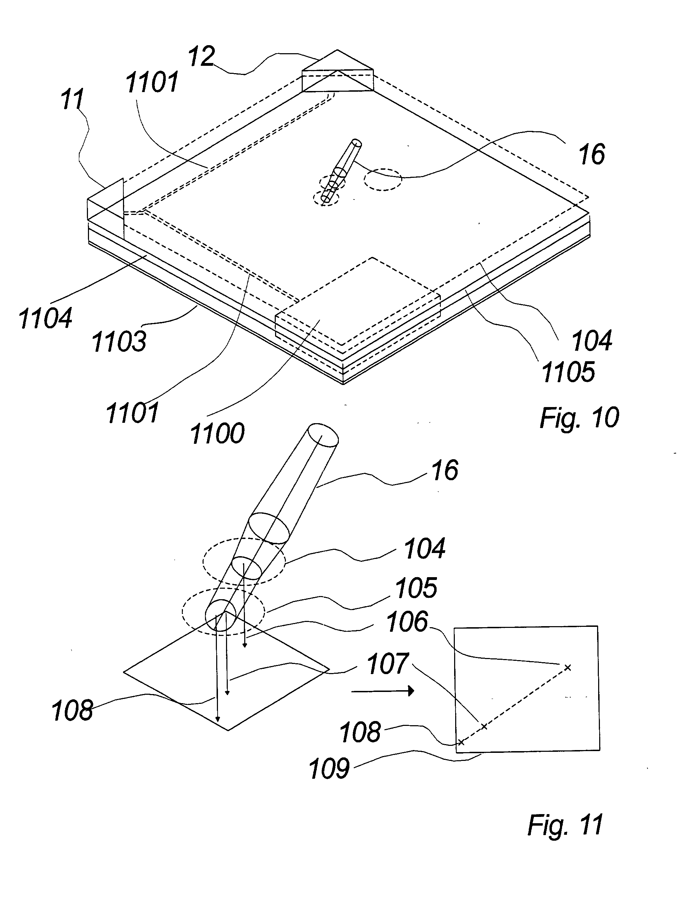

Fig. 10 illustrates a further aspect of the invention and shows a whiteboard 105 comprising an integrated position detection system.

The whiteboard 1105 comprises a planar surface 1104 adapted to writing. The surface 1104 is metallic and electrically conductive.

Moreover, the board comprises a rear plane 1103, preferably also an electrically conductive member.

The board 1105 comprises two detecting units 11, 12 mounted in two corners of the board. The units 11, 12 communicate with a control unit 1100 via communication cables 1101 arranged in the board behind the planar surface 1104 in such a way that position indicating signals are established.

Both analogue and digital signal transmission may be applied via the cables 1101.

The units may moreover be powered by means of the cables 1101.

The control unit 1100 controls the retrieval of position indicating signals from the units 11, 12 and the transmission of position indicating data to external units such as computers or other data carriers.

The data is primarily exported for the purpose of displaying and modification in a computer.

Thus, electronic components and wiring arranged under the conducting front surface 1104 benefit from the obtained electromagnetic sheltering effect.

Preferably, the front surface 1104 and the rear plane 1103 form a Faraday cage together with the edge portions of the board. In some cases, screening may be obtained by a conducting front surface only.

For explanatory purposes, a plane 104 illustrates the focal plane of the cordless detection means 11, 12.

Fig. 11 illustrates an important feature of the invention with reference to the above-mentioned focal plane 104.

A marker 16 writing on the surface 1105 of the illustrated whiteboard has an actual tip position 108.

Nevertheless, the inclination of the marker with respect to the writing surface implies that position detection based on e.g. reflection or transmission from a point in the plane 104 on the marker elevated from the surface suffers from more or less significant errors when the marker is inclined with respect to the normal vector of the surface.

According to one aspect of the invention, this error may be minimized simply by lowering the focal plane of the detection arrangement.

According to one embodiment of the invention dealing with retrofittable sensorarrangements, this lowering is obtained by reducing the thickness of the magnetic fastening means as much as possible while maintaining reliable fastening of the sensor arrangement, both with respect to other sensors and to the mounting surface.

However, a certain distance between the detection system and the foundation will often be necessary due to the foundation not being completely smooth or flat in its full size. Small variations or maladjustments in the foundation may cause errors in the position detection due to reflection from these. Normally, a distance more than 1 mm is preferable to ensure a measurement free of foundation errors. At the same, time the distance is preferably not in excess of 20 mm since this may cause problems when detecting the correct position of the pen.

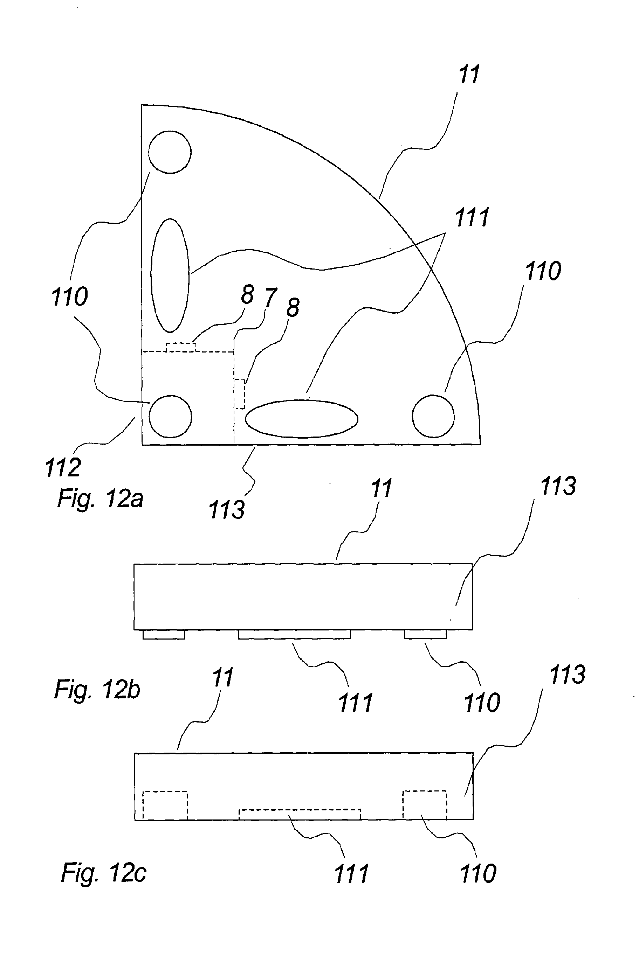

Figure 12a shows an embodiment of the detector box 11 which may be placed directly on the foundation with a magnet or magnets 110 or be completely incorporated in the detector box as shown in fig. 12c. To ensure that the detector box 11 can be placed close to the foundation, it is constructed with a magnet or magnets 110 positioned closely to the sides 112, 113 of the detector box 11. Hereby, the usually centrally placed sensors 8 may be positioned at almost any preferred distance from the foundation.

It is, however, also possible and sometimes desirable to elevate the detector box 11 over the foundation. Errors from a less steady base for the box caused by dust and similar objects coming between the box 11 and the foundation are avoided. With an elevation of up to 2 mm, it is usually possible to ensure a stable base for the detector box 11.

The elevation can advantageously be obtained by having one or more magnets 110 extending out of the detector box 11 at a preferred distance as shown in fig. 12a and 12b.

In an embodiment, it is possible to change the position of the detector box by changing the extension of the magnet or magnets. Hereby, errors from local elevation can be avoided since many whiteboards have a little metal sign in the upper left or right corner which conflict with the use of a detector box. By changing the extension of one or more magnets, it is possible to overcome this obstacle. The right level of the detector box can be obtained by using a spirit bubble in a visible place on the box when the extension of the magnets is performed.

In another embodiment, the magnet or magnets are replaceable by other magnets of different sizes. The set of magnets may consist of a magnets of a size providing no elevation of the detector box and replacement magnets creating an elevation of e.g. 1 mm. In the same manner, it is possible to have sets of magnets with different magnetic strengths to different types of whiteboards.

When using one or more magnets to fasten a detector box onto a foundation, it is important that the magnet or magnets are placed correctly in the detector box to ensure steady and durable fastening.

By the use of two detector boxes, each placed in the upper corners of a whiteboard, the shape of the detector box following the sides of the whiteboard would usually be preferable. Such a detector box is illustrated in figs. 12a-c and will create a detector box 11 with a triangular shape of the sides 112, 113 and with three corners. To ensure steady and durable fastening of the position detector by placing a magnet 110 is placed in each corner.

Alternatively, two magnets may be used in two of the corners ensuring a durable but less steady fastening.

However, one larger magnet is also possible if placed centrally on the detector box.

This will create the necessary steadiness and fastening of the box in a very simple way.

In fig. 12a, it is illustrated that fastening with one or more magnets on the detector box may be enhanced by one or more areas 111 of silicone, rubber or another material with a sticky effect. The areas 111 will be similar in size or a little larger than that of the magnet or magnets to ensure optimal fastening of the detector box. The areas may be placed around a magnet or between magnets and close to the sides 112-113. There will normally be at least two areas in order to strengthen the fastening in at least two directions.

Together with the magnet or magnets, a very durable and steady fastening is created which will not change significantly over time.

Another possibility is to use a magnetic film on all or parts of the detector box surface against the foundation of the whiteboard. Preferably, the film has a sticky effect besides the magnetic effect to ensure fastening onto the foundation. The film may be used in different patterns and areas on each detector box and the shape of each area may be designed in such a way that resistance against forces from a particular direction may be enhanced significantly if so desired.

The film generally has the advantage of being easy to use in a manufacturing process. At the same time, the thickness of the film is approx. 1 to 2 mm which provides a reasonable distance between the detector system and the foundation.

### Integrated detectors

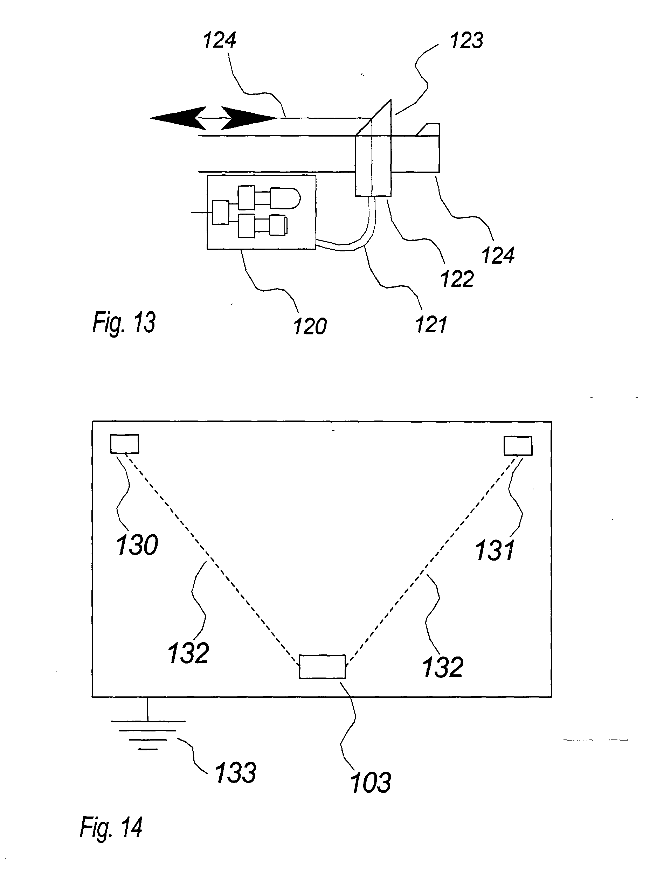

In fig. 13, another embodiment of the invention is illustrated. A whiteboard is constructed with a part of the detector box 120 being integrated in the whiteboard. The part of the detector 120 box which is integrated is placed on the rear side 124 of the whiteboard and may e.g. consist of sensors, sensor controllers and communication units. The connection from a sensor to the front side may be obtained by using an optical fiber 121. To ensure proper radiation of the IR light 124 over the front side, a prism or a mirror 123 is used in continuation of the fiber 121. A connector 122 is also used to hold the fiber in its place in relation to the whiteboard and the prism or mirror 123.

The visible part of the detector box may be narrowed down to only the prism or mirror 123. This means that the visible part can be less than 20 mm in size and generally take up very little space compared with standard detector boxes.

Hereby, it is possible to conceal most of the detector from the users and only leave a small part exposed on the front side.

It is also possible to make the connections from the rear to the front side of the whiteboard without the use of optical fibers. Such a connection may consist of a light source on one side through air to a mirror or a prism 123 on the front side of the whiteboard.

Also, the light source can be placed on the front side with an electrical connection through a hole to the rest of the detector on the rear side or the detector may be completely exposed on the front side. In these cases, it is possible to lower the level of the detectors from the foundation by countersinking the detector boxes in the whiteboard.

As illustrated in figure 14, it is possible to place a controller box 103 with a power supply in separate place away from the detector boxes 130, 131 and only transmit the necessary power to the detector boxes through a connection 132. The measured data from each of the detector boxes are transmitted to the controller box through the same or separate connections in a similar manner. It is hereby possible to minimize the number of elements in the detector box 130, 131 to the detector parts and a communication part which transform the weakly measured data to packets of data ready for safe transmission to the controller box 103.

If the measured data is shielded from electric or magnetic fields during transmission, it is possible to build detector boxes which only comprise the necessary detector systems. The communication part will not be necessary due to the shielded transmission. One way to shield the detector boxes, the transmission and the controller box is to ground the whiteboard itself 133. Small openings in the whiteboard, e.g. in connection with the optical fibres, have no practical influence on the shielding of the system and especially the detector boxes.

Usually, the connection 132 between a detector box 130, 131 and the control box 103 will be a four-wire connection where two of the wires are power lines and the remaining two are communication lines. However, if the whiteboard is grounded, one of the power lines is no longer necessary and can be removed.

By using well-shielded cables and/or by integrating the system in the board, it is possible to place the sensor control and data acquisition hardware within the penholder 13A, 13B, too, with the exception of the transducers. Such benefits are easier and less expensive in production and provide smaller sensor houses.

It is possible to establish completely wireless communication between the control box and a detector box or between the detector boxes.

In all of the embodiments, the position detector system may be operated by a wireless communication device that may e.g. be incorporated in a position detector box or in the whiteboard itself in such a manner that it communicates wirelessly with a control box, a display and/or an external data processing unit.

The use of wireless communication does away with problems of noise disturbing the transmission of measured signals but it also means that the detector boxes require a separate power source, e.g. a battery. During normal use of a whiteboard, the use of batteries is less attractive, especially since an external electrical power supply is usually available nearby.

Incorporating detectors in a whiteboard instead of using separate devices has many advantages. The constructor knows the exact dimensions and tolerance on the whiteboard making it possible to create a more precise system. Also, the position of the detector boxes will not change significantly over time.

In addition, the integration of the typically two position detector measuring units in the board will result in a significant reduction in calibration problems between the two detector boxes.

### The pen

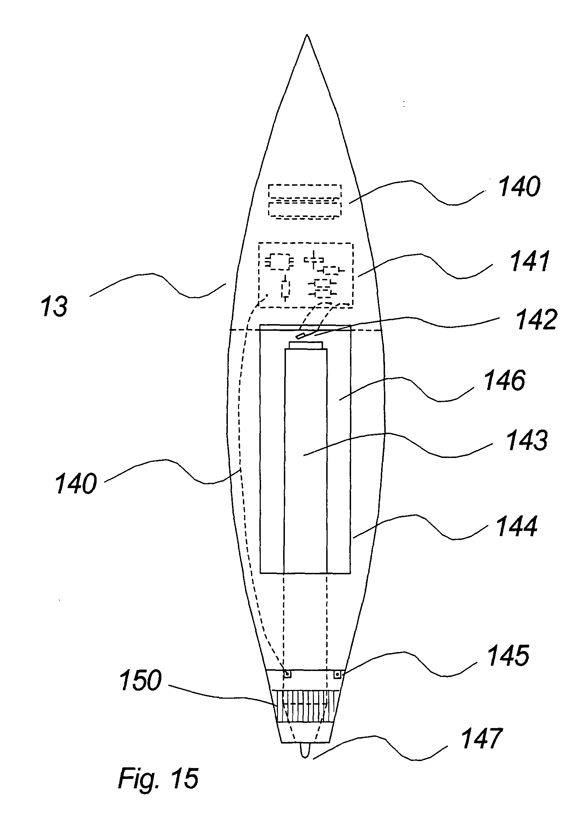

Figure 15 illustrates an embodiment of a pen 13 which can be used together with the detector position system. The pen has a compartment 146 designed for containing and keeping a standard whiteboard pen 143. The standard pen 143 is loaded into the compartment 146 through an opening 144 and the opening is hereafter closed by a door (not shown on figure 15).

The point 147 of the standard pen 143 has access to the outside of the pen 13 through an opening at the bottom of the pen. When not in use, the bottom is sealed off by a cap. The top of the standard pen 143 lies under a switch 142. The switch 142 is normally disconnected. However, if the standard pen 143 is pressed towards the switch, the switch will connect a circuit. The pressure of the standard pen 143 towards the switch will normally occur when the point 147 of the standard pen 143 is pressed against e.g. a whiteboard.

A microprocessor or a similar component on a circuit board 141 detects the current and activates a number of LEDs 145 through the wire 140. The LEDs are placed symmetrically around the lower part of the pen 13 ensuring that light is radiated in all directions from the pen. The light from the LEDs 145 will be detected by the sensors in the detector boxes and a position detection will take place. At the same time, it is possible to recognise the standard pen by e.g. its colour.

According to a semi-active embodiment of the invention, the marker may be mounted with a retro-reflective material. The retro-reflective material is adapted to reflecting light emitted from external light emitters to external position detector arrangements arranged on the writing surface. The arrangement of LEDs may then be adapted to transmit coded information to a corresponding external receiver, the information determining the type of the marker; pen, eraser, etc; and the dynamic activity of the marker; i.e. is it writing on a board or it is elevated with respect to the surface (on/off). If the pen is semi-active, patterns, codes or retro-reflectors on the pen may be omitted.

In the upper part of the pen, one or more batteries 140 have been placed which power the electric components in the pen.

In another embodiment of the pen 13, the electric circuits are removed from the pen. Instead, the lower part 150 of the pen is provided with a number of horizontal 152 and vertical 151 stripes. It is hereby possible for the detector boxes to "see" the stripes and determine the position and height of the pen proportionally to the whiteboard. With the horizontal stripes 152, it is possible to determine the distance of the pen from the whiteboard and hereby determine whether the user of the pen is actually touching the whiteboard with the pen.

The markings at the bottom of the pen 13 can also be polarised filters ensuring that only a part of the light is reflected.

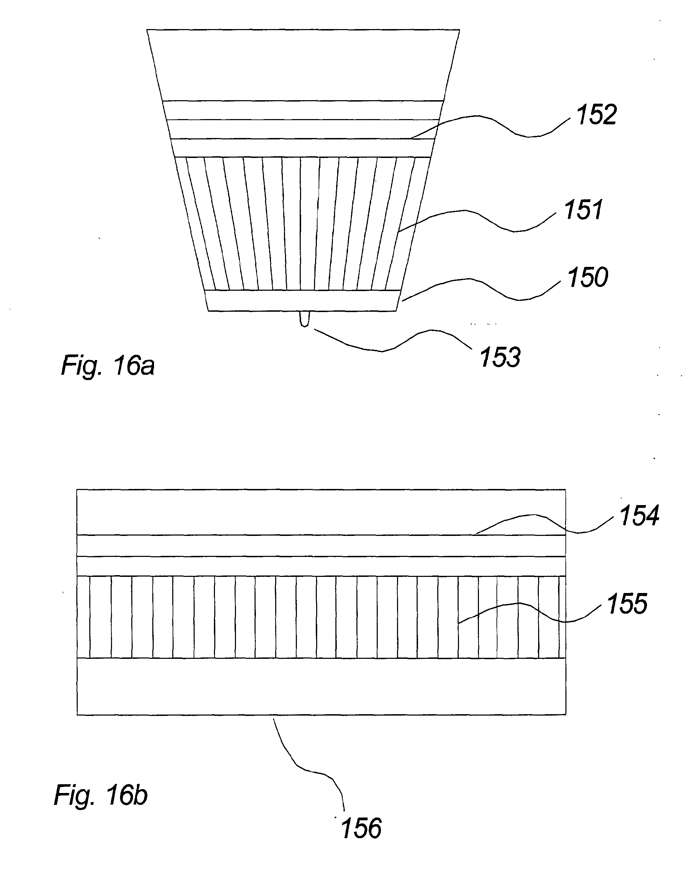

In figure 16b, an add-on detector surface 156 with horizontal 154 and vertical 155 markings is illustrated. The add-on detector surface 156 will preferably be provided with a sticky layer on the rear side. The user can hereby place the surface on a standard whiteboard pen and use it as a pen in a detector position system such as the invention.

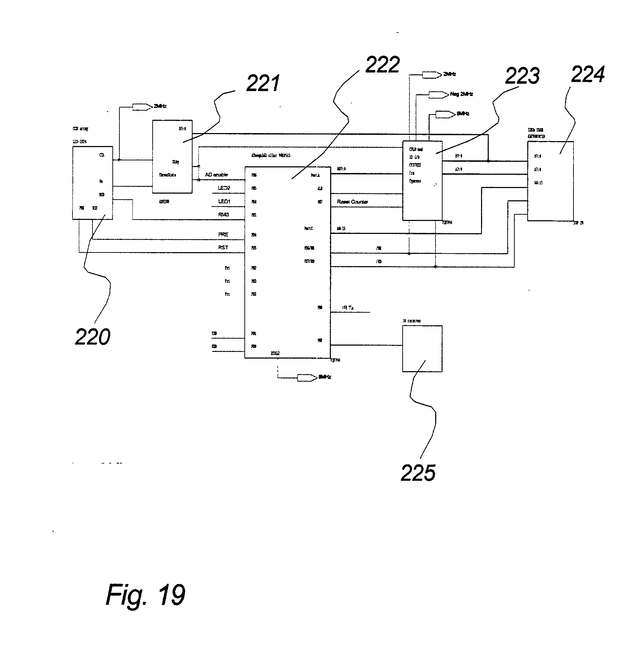

In figure 19, a diagram illustrates a preferred embodiment of a detection position system according to the invention. The system comprises 5 primary components:
1. CCD array 220.
2. A/D converter 221 preferably a AD9280 from Analog Devices or TLC5510A from Texas Instruments.
3. Microcontroller 222 preferably an ATmega 161 from the company Atmel.
4. CPLD (Complex Programmable Logic Device) 223, preferably a CY37032 from the company Cypress.
5. SRAM (Synchronous Random Access Memory) 224, preferably 32 kB and alternatively 128kB, 512 kB or larger.

For the position detection system, a microcontroller 222 with device number 90S8515 from Atmel may be chosen. The reason for chosing this controller is its good external memory interface. This is important as it is necessary to be able to save all data from the CCD-array 220 as quickly as possible.

Together with a Complex Programmable Logic Device (CPLD) 223, the microcontroller 222 is responsible for performing the following tasks:
- Initiating the process of a measurement.
- Turning a light source on and off e.g. a laser-diode.
- Reading of data from the CCD array 223.
- Analog-to-digital converting performed by the A/D converter 221.
- Saving data to the SRAM-circuit 224.
- Calculations on the saved data.

To know when to measure positions, the microcontroller 222 is connected to an IR-receiver 225. When the pen touches the board, it sends out an IR-signal received by the IR-receiver 225 which is sent to the microcontroller 222. This makes the microcontroller initiate the measurement process. The IR-signal from the pen can either be a start-signal telling the microcontroller to start and keep measuring until a stop-signal is received, or it can be a continuous signal, telling the microcontroller to measure for as long as it is receiving the signal.

To make a measurement of a position, the microcontroller 222 initially reads and saves one set of data from the CCD array 220 with the light source, e.g. a laser-diode, turned off. The laser-diode is then turned on and makes a new reading of the CCD array 220. After the two readings, the microcontroller 222 starts calculating the position. Initially, it calculates the difference between the two readings. This cancels the effect of disturbing IR-light emissions from the environment. From the result of this subtraction, the microcontroller 222 then calculates the position of the CCD array 220 by reflection from the pen, thereby determining the angle of the pen's position in relation to the CCD array 220. This angle is calculated with a precision of 12 bit from the data of the CCD array 220 which has a resolution of only 10 bit.

The clock signal from the microcontroller 222 is altered from 8 MHz to 2 MHz in the CPLD 223 while an inverted version of the signal is also possible whereby the sampling of data in the A/D converter 221 will become more accurate seen from a time perspective.

Since the microcontroller 222 can reset the counter in the CPLD 223 and the microcontroller and the counter share the same clock signal, the microcontroller always knows in which time period the counter is.

Position data obtained by the CCD array 220 is directed to the A/D converter 221 where the signal is sampled into digital form. The A/D converter has a connection to the SRAM 224 which makes it possible to transfer the data from the CCD array through the A/D converter to the SRAM.

The microcontroller 222 enables the A/D converter 221 by forwarding an A/D enable signal to the A/D converter 221. The signal also provides the CPLD 223 with the information that the microcontroller 222 cannot obtain a connection to the data bus between the CPLD 223 and the SRAM 224. When data from the A/D converter 221 is ready, the microcontroller 222 starts to write data to the SRAM 224. However, the microcontroller 222 is only in control of the address and writing signals. The position data itself comes from the A/D converter 221. Subsequent to the data being transferred to the SRAM 224 and the microcontroller 222 initiating its work with the data, the CPLD 223 functions as an address/data latch and ensures that data can be written to and from the SRAM 224. By the use of the ALE (Address Latch Enable), WR and RD signals, the CPLD 223 does this. With the WR and RD signals, it is decided whether data from the SRAM 224 is to be transferred to the microcontroller 222 or transferred from the microcontroller 222 to the SRAM 224 by enabling the necessary outputs in the SRAM 224 and/or microcontroller 222.

By transferring the data directly from the A/D converter 221 to SRAM 224, it is possible to use less latches than usual.

Data are stored in a similar way as if the system did not use a CPLD 223. However, no reading from a port is performed. Instead, the microcontroller makes a NOP ("pause" command) to ensure that the timing is correct.

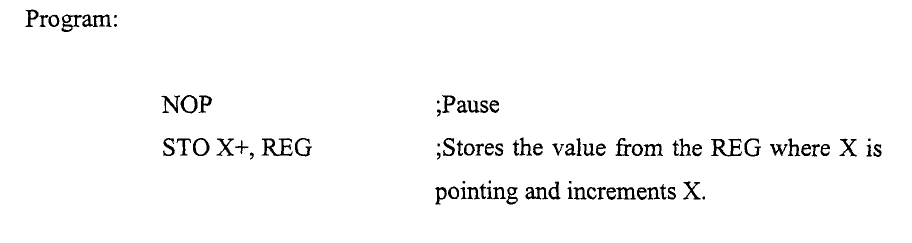

This is repeated 1024 times.

The NOP command demands 1 clockcycle and STO demands 3 clockcycles since storing in an external memory takes place.

If a microcontroller 90S8515 is chosen, 50% of the code memory (8 kB) will be used to transfer data from the CCD array, thereby leaving 4 kB for calculation and communication with the control box. If the Atmega 161 (16 kB) is chosen, 12 kB can be used for calculation and communication with the control box.

The program memory of the 90S8515 is based on flash-technology which gives the ability to update the program memory. This means that it is possible to alter the program until the controller is placed inside the detector box. However, the user has no ability to update the program as the 90S8515 cannot alter its own program memory. Another disadvantage of the 90S8515 is that it has no built-in multiplier. This means that it is necessary to program a multiplier if any multiplication is to be made such as e.g. filtering calculations. Thus, the software will be slowed considerably.

If it is necessary to let the user download software, update and install it himself, or it is necessary to perform hard calculations comprising multiplication, it is possible to use the microcontroller ATmega161, instead. This microcontroller has built-in hardware multiplication circuits which e.g. ease time-consuming filtering algorithms while also having the ability to alter its own program memory. If a 90S8515 is used, the microcontroller must go back to the manufacturer for reprogramming of firmware.

It is also possible to use an ATmegal63. It is similar to the ATmega161 but has a built-in AD-converter which has no usage in this application. This makes the use of the ATmegal63 a more expensive solution.

If the CPLD 223 has a counter/divider which can divide with 3, it is possible to do without the NOP command and thereby save 50% of the code memory. The needed code memory will then only be 2 kB and the frequency of the clock signal will increase to 2,67 MHz.

In another embodiment, it is possible to save program memory in the microcontroller by lowering the frequency of the clock signal to 1 MHz. The CCD array and the A/D converter is hereby clocked with 1 MHz and the microcontroller now has 8 clockcycles to work on at each value instead of 4 clockcycles.

The program code will approximately be as follows:

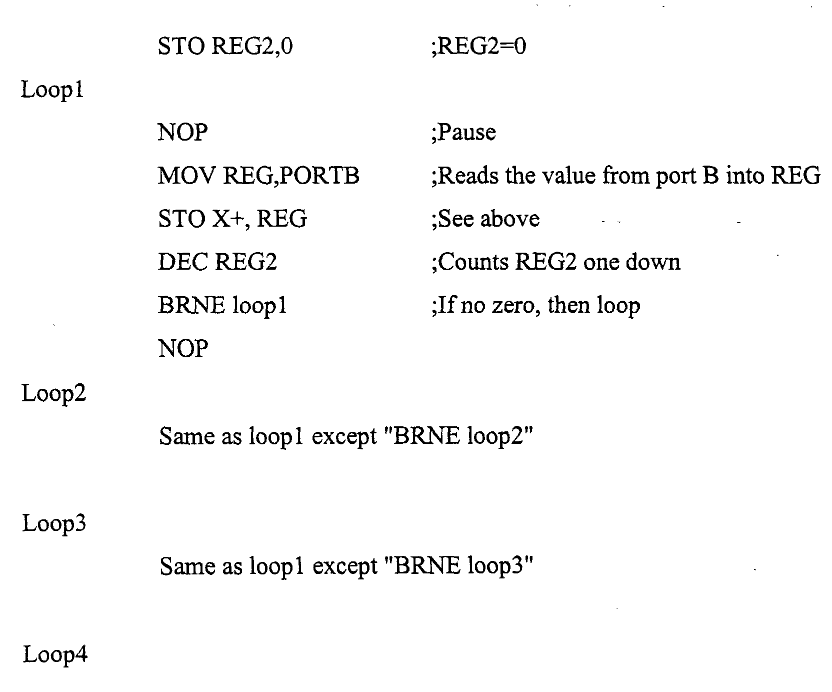

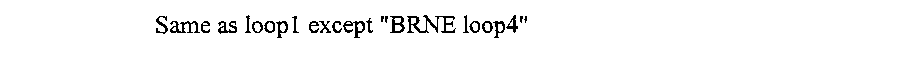

Expenses saved on program coding are considerable. This means that the last pixels of the CCD array will be more exposed than the ones in the first embodiment e.g. 0.5 milliseconds.

### Memory dump and data transmission

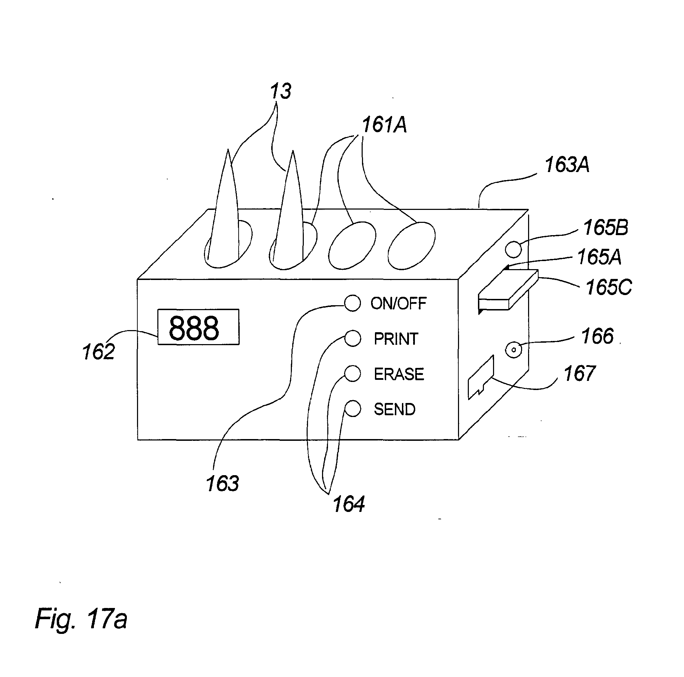

Fig. 17a shows a detailed view of an embodiment of a control box built into a penholder 163A. It comprises a number of slots 161A in which the pens 13 can be placed. At the front, the penholder 163A comprises a digital display 162, an On/Off button 163, and a number of additional buttons 164. The penholder 163A further comprises a slot 165A for inserting a memory card 165C such as a Flash-RAM-card. It also comprises a button 165B for releasing the memory card 165C, a socket 166 for attaching the penholder 163A to a power supply such as a transformer, and a socket 167 for attaching the penholder 163A to a computer network.

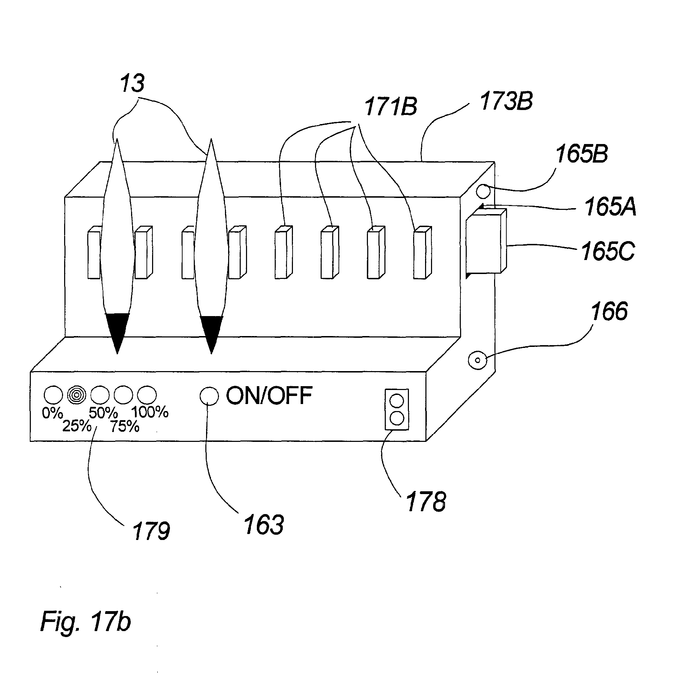

Fig. 17b shows another embodiment of the penholder 173B. It comprises a number of clamps 171B in which the pens 13 can be placed. It further comprises an On/Off switch 163, a socket 165A for a memory card 165C, such as a Flash-RAM-card, and a button 165B for releasing the memory card 165C. The penholder 173B further comprises a socket 166 for attaching a wire from a power supply, such as a transformer, and a communication interface 178, such as an infra-red transceiver, a radio frequency transceiver or a socket for serial or parallel communication. Further, it comprises an array of light-emitting diodes 179 for showing the amount of used memory in relation to the memory card 165C.

It should be noted that these two embodiments merely illustrate some of the possibilities. It is within the scope of the invention to combine the elements of these two embodiments in any way to obtain a preferred embodiment of a penholder.

The central processing hardware inside the penholder does all the necessary calculation, and saves the information on the memory card. This does away with the requirement of having an external computer with appropriate software for processing and data storage which is standard with the known systems.

Through the communication interface 178 or the network connection 167, it is possible to send information from the memory card to a computer or a network server. It is possible to transfer data real-time during the whiteboard session or to download data from the memory card when convenient. Communication with a computer or another external device can be established by the use of parallel communication such as through the printer port of the computer, by the use of serial communication such as through the serial port or USB port of the computer, by the use of infra-red technology such as the IrDA standard, by the use of radio communication such as the Bluetooth standard communicating at approx. 2GHz, or by attaching the penholder to the computer network and provide it with an IP-address and thus operate as a network unit.

Alternatively, it is possible to detach the memory card 165C by using the button 165B and plug the card into an external appropriate card reader.

The memory card 165C is preferably a Flash-RAM-card with a memory amount of 16 Mbit. With this memory size, it is possible to write effectively at the board for about 2 hours and 20 minutes. Usually, the pen is only in use a fraction of the time during which a meeting lasts, e.g. 1/5 of the time, which leads to a meeting duration of 11 hours and 40 minutes.

The great advantage of using the memory card is that there is no need to turn on a computer and start software programs before the whiteboard session can begin.

To inform the user of the currently available amount of memory, the penholder can be equipped with a display 162 or an array of light-emitting diodes 179 or some other visible or audible indication such as a beep when all memory is used.

The buttons 164 provide the user with access to further functions of the system. These functions are not necessary but can be implemented for the convenience of the user. Functions which could be advantageous are e.g. a print-function to send the current board image to a local or a network printer, an erase-function to erase the memory card when starting a new session, a send-function to send the current board image to some predefined e-mail-addresses or to all connected users, or an upload function to initiate transmission of memory data to a connected computer. Many other functions are imaginable within the scope of the invention.

One advantage of placing the buttons on the controller box instead of on the sensors, as known from some systems, is that there is no risk of moving or decalibrating the sensors by pushing a button.

A further functionality which may be implemented in relation to the penholder is a display upon which the user writes his notes before the meeting, and then reads his notes from the display instead of having paper notes during the meeting.

A further improvement of the penholder may be obtained by using rechargeable batteries for the pens 16, and by incorporating some metal connectors in the pen slots or cramps in the penholder 161A,171B and by including an appropriate charging circuit, so that the pens 13 can be recharged when not used.

Alternatively, the batteries in the pens 13 can be exchanged with some kind of circuit with the ability to store a small amount of power which will keep the pen sending as long as it is off the penholder.

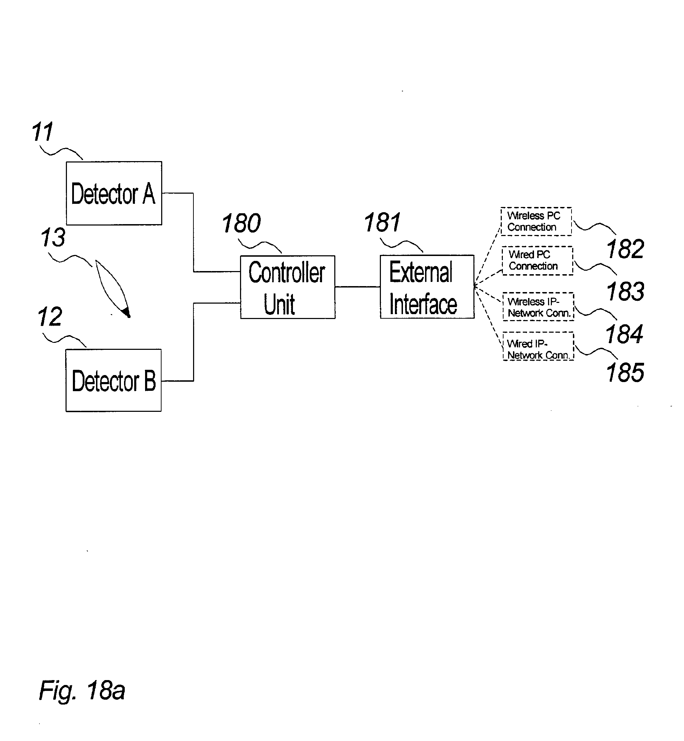

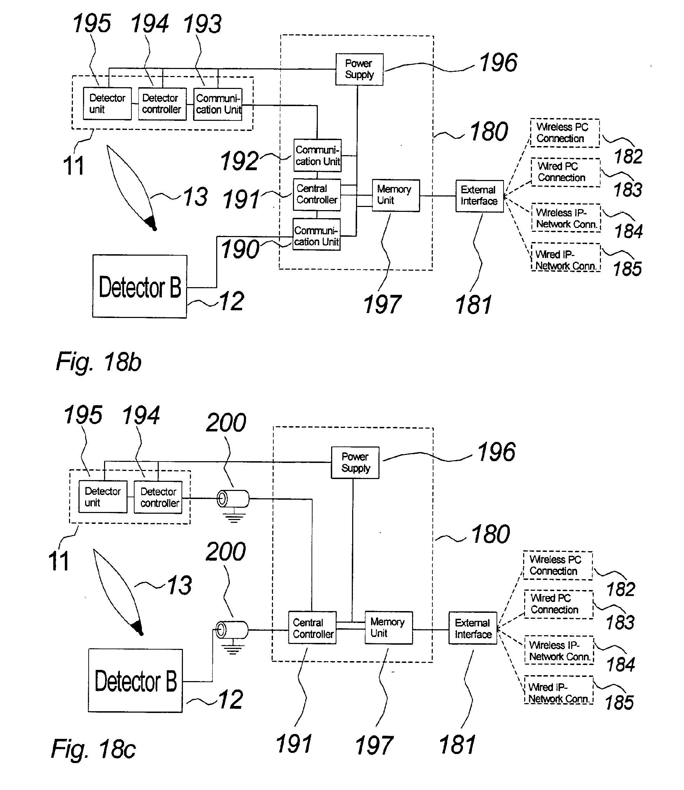

Figure 18a shows elements of a detector position system according to the invention schematically.

The system consists of at least two detectors 11, 12, detectors A and B, which transmit the measured signals of a pen 13 to a controller unit 180 and receive a control signal from the controller unit 180. The controller unit has a microprocessor to convert the measured signals into position signals which can be used by another apparatus connected to the controller unit. The apparatus is connected to the controller unit 180 through an external interface 181. The connections may be wired as well as wireless. The connections can e.g. be between the controller unit and a PC, wireless 182 or wired 183, or an IP-network, wireless 184 or wired 185.

In fig. 18b, a detailed embodiment of the detector position system according to the invention is illustrated.

A central power supply 196 is placed within the controller unit 180 and supplies all elements of the unit with the necessary power. At the same time, the power supply 196 supplies power to the elements of the detector box 11, 12 over a wire connection. The detector boxes will therefore not have an external power supply.

In fig. 18c, another detailed embodiment of a detector position system according to the invention is illustrated. The wires between the detector boxes 11, 12 and the central controller 191 are shielded against magnetic or electric fields from the exterior. This means that the communication units 190, 192, 193 are no longer necessary because the position data can be transmitted directly from the detector controller 194 through the shielded wires 200 to the central controller 191.

Similar to the embodiment in figure 18b, a central power supply 196 is placed within the controller unit 180 which supplies all elements of the unit with the necessary power. At the same time, the power supply 196 supplies power to the elements of the detector box 11, 12 through a wire connection. The detector boxes will therefore not have an external power supply.

Since the detector boxes 11, 12 and the controller unit 180 in this embodiment have fewer elements than the previous embodiment, there are also fewer elements to supply with power.

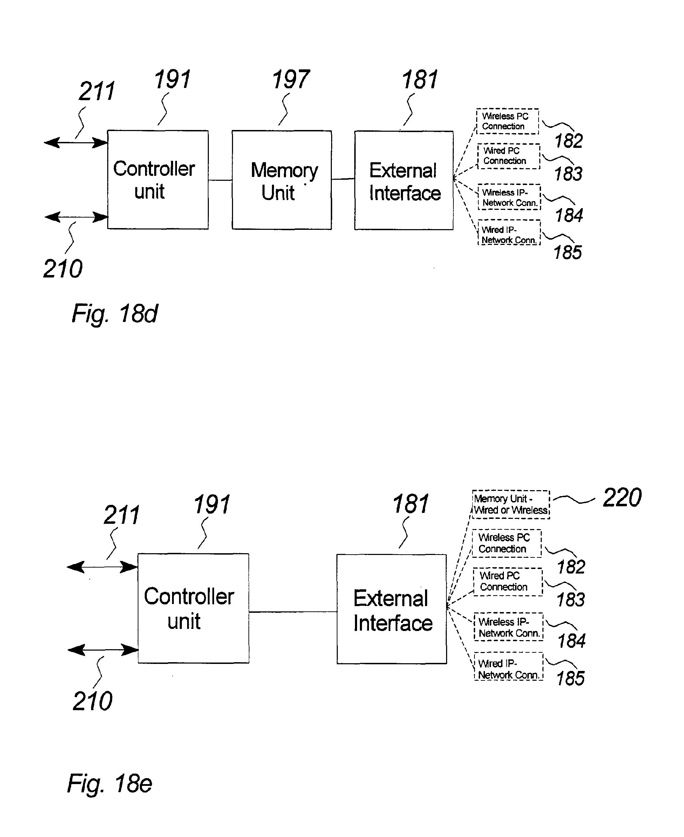

In fig. 18d, a detailed embodiment of a part of the detector position system according to the invention is illustrated. It shows the communication of data from the controller unit 191 to an internal memory unit 197 and further through an external interface 181 to external units e.g. a PC.

In fig. 18e, another detailed embodiment of a part of a detector position system according to the invention is illustrated. It shows the communication of data from the controller unit 191 directly to an external interface 181. One or more external apparatuses or units may be connected to the interface 181, including a memory unit 220. The memory unit 220 is similar to the internal one in fig. 18d. By making it an external memory unit, it is possible to store position data on the memory unit 220 and disconnect it from the interface 181. The disconnected memory unit 220 can be carried to another location and transferred to e.g. a PC.

Besides the memory unit 220, it is also possible to transfer position data in a wired or wireless fashion to an external PC or IP-network 182-185.

## Claims

1. Position detection system for a detection area, preferably a whiteboard, said system comprising means for detecting at least one position of at least one marker operating within the said detection area,
said system comprising means for storing a sequence of said detected positions in at least one memory arrangement, said memory arrangement comprising interfacing means (181) for exporting stored positions or at least some of the positions.

2. Position detection system according to claim 1, wherein the memory arrangement comprises a removable memory cartridge (165C; 220)

3. Position detection system according to claim 1 or 2, wherein the interface means comprises a wireless interface (182; 184) adapted to wireless transmission of at least part of the data stored in said memory arrangement to an external processing unit.

4. Position detection system according to claims 1-3, wherein the interface means comprises an IRDA interface or a Bluetooth interface.

5. Position detection system for a detection area, preferably a whiteboard, said system comprising means for detecting at least one position of at least one marker operating within said detection area,
said system comprising cordless transmission means (11; 12) arranged in relation to the detection area,
said at least one marker (16) comprising retro-reflecting means arranged to reflect signals transmitted from said cordless transmission means (11; 12) toward cordless detection means (11, 12),
at least one of said markers (16) comprising further cordless transmission means (145),
said further transmission means (145) being adapted to transmitting coded communication signals to said cordless detection means (11, 12).

6. Position detection system according to claim 5, said communication signals comprising at least one signal representing an on/-off condition of the said marker (16).

7. Marker (16) for a position detection system, said marker (16) comprising retro-reflecting means for reflection of electromagnetic light, said marker (16) comprising further transmission means (145) adapted for transmission of coded communication signals to cordless detection means (11, 12).

8. Marker according to claim 6, said communication signals comprising at least one signal representing an on/-off condition of the said marker (13).

9. Position detection system for a detection area, preferably a whiteboard, said system comprising means (130, 131) for detecting at least one position of at least one marker operating within said detection area,
said system comprising cordless transmission means (11, 12) arranged in relation to the detection area,
said at least one marker (13) comprising retro reflecting means (150) arranged to reflect signals transmitted from said cordless transmission means () to cordless detection means (11, 12),
said retro reflecting means (150) comprising a pattern (150, 151) of retro-reflective material
and said detecting means (130, 131) for detecting at least one position of at least one marker comprising means for detecting the vertical position of the at least one marker (13) on the basis of recognition of said pattern (150, 151).

10. Position detection system according to claim 9, wherein the detection means (130, 131) comprises at least one CCD-camera, and wherein the vertical position of at least one of the markers (13) is derived on the basis of the vertical position of the pattern on the CCD-camera.

11. Marker (13) for a position detecting system, said marker (13) comprising retro-reflecting means (150) for reflection of electromagnetic light, said retro reflecting means (150) comprising a pattern (150, 151) of retro-reflective material .

12. Board system, preferably a whiteboard comprising a board (105), or a wireless position detection system, said system being arranged for detection of the position of at least one marker (16) with respect the board,
at least a portion of said board comprising a galvanic conducting material,
said position detection system comprising at least two sensor arrangements (11, 12) being arranged so as to detect position indicating signals emitted from said at least one marker (16), at least a portion of the wireless position detection system being at least partly encapsulated by the portion (1104) of said board comprising a galvanic conducting material.

13. Board system, preferably a whiteboard, comprising a wireless position detection system, said system being arranged for detection of the position of at least one marker (16) with respect the board (105),
at least a portion of said board (1104) comprising a galvanic conducting material,
said position detection system comprising at least two sensor arrangements (11, 12) being arranged so as to detect position indicating signals emitted from said at least one marker (16),
said at least two sensor arrangements communicating with at least one central processing unit (1100) by means of electric connections (1101), at least a part of said electric connections being at least partly encapsulated by the portion of the board comprising a galvanic conducting material.

14. Board system according to claims 12 and 13, wherein said portion of said board comprising a galvanic conducting material is electrically grounded.

15. Board system according to claims 12-14, said board system comprising built-in power supply means (1100), said power supply means being at least partly encapsulated by means of said portion of said board comprising a galvanic conducting material.

16. Board system according to claims 12-15, wherein said power supply means are mains-coupled.

17. Board system according to claims 12-16, wherein the board system comprises a board surface having a bend of less than 10 millimeters, preferably less than 5 millimeters, in the normal direction.

18. Position or angle detection unit (112) comprising a housing (11) mounted with fastening means (110), said fastening means being adapted to fastening the unit (112) onto a mounting surface such as a whiteboard surface
said housing (11) comprising position detection means (8) comprising at least one input portion (114) said input portion being adapted to guiding light or sound beams to a corresponding sensor arrangement (7) within the housing ()
said fastening means comprising magnetic fastening means (110).

19. Position or angle detection unit (112) according to claim 18, wherein the unit (112) comprises light receiving means (8), preferably infrared light receiving means (8).

20. Position or angle detection unit (112) according to claim 18 or 19, wherein said input portion comprises optical lens means (114).

21. Position or angle detection unit (112) according to claims 18-20, wherein the magnetic fastening means are arranged with respect to an optical path between the input portion (114) and the position sensor arrangement (7) in such a way that the distance (d) between an input focal plane (115) and the mounting surface ()is less than 50 millimeters, preferably less than 20 millimeters, when the unit is mounted to the mounting surface ().

22. Position or angle detection unit (112) according to claims 18-21, wherein the magnetic fastening means comprise a plurality of magnets (110) arranged on the lower surface of the housing.

23. Position or angle detection unit (112) according to claims 18-22, wherein the magnetic fastening means comprise one magnet arranged on the lower surface of the housing.

24. Position or angle detection unit (112) according to claims 18-23, wherein the magnets of said magnetic fastening means are less than 10 millimeters, preferably less than 4 millimeters.

25. Position or angle detection unit (112) according to claims 17-24, wherein the unit comprises means for adjusting at least one of the magnets vertically.

26. Position or angle detection unit (112) according to claims 17-25, wherein the fastening means comprise at least one high friction member (111) arranged in such a way in the unit () that at least one of the high friction members (111) is in contact with the mounting surface when the unit is attached to said surface by means of said fastening magnets/means.
